# EUROPÄISCHE PATENTSCHRIFT

(11) **EP 4 155 558 B1**
(45) Veröffentlichungstag und Bekanntmachung des Hinweises auf die Patenterteilung: **04.09.2024**
(21) Anmeldenummer: 22193378.1
(22) Anmeldetag: 01.09.2022
(51) Int. Cl.: F16B 13/14, F16B 43/02

(54) **BEFESTIGUNGSANORDNUNG ZUR VERANKERUNG IN EINEM ANKERLOCH**
FASTENING ASSEMBLY FOR ANCHORING IN AN ANCHOR HOLE
DISPOSITIF DE FIXATION DESTINÉ À L'ANCRAGE DANS UN TROU D'ANCRAGE

(30) Priorität: 23.09.2021 DE 102021124671; 11.07.2022 DE 102022117150
(43) Veröffentlichungstag der Anmeldung: 29.03.2023
(73) Patentinhaber: fischerwerke GmbH & Co. KG, 72178 Waldachtal (DE)
(72) Erfinder: Tresoldi, Antonio, 35020 Masera di Padova (PD) (IT); Martini, Michele, 30038 Spinea (VE) (IT)
(74) Vertreter: Suchy, Ulrich Johannes

(56) Entgegenhaltungen:
- EP-A2- 2 128 458
- DE-A1- 102011 001 271
- DE-A1- 102013 101 505
- DE-A1- 3 014 078
- DE-A1- 3 204 417
- DE-A1- 3 411 253
- DE-U1- 9 405 387
- FR-E- 88 658

## Beschreibung

### Befestigungsanordnung zur Verankerung in einem Ankerloch

Die Erfindung betrifft eine Befestigungsanordnung zur Verankerung in einem Ankerloch mit den Merkmalen des Oberbegriffs des Anspruchs 1.

Die Offenlegungsschrift DE 32 04 417 A1 offenbart eine Befestigungsanordnung mit einer Ankerstange, die mit einer aushärtenden Masse, beispielsweise einem Zementmörtel, in einem Ankerloch verankert wird. Um die Ankerstange vor einem Einbringen der aushärtenden Masse im Ankerloch zu zentrieren, werden an einem vorderen Ende und in einem Abstand von dem vorderen Ende zwei Zentrierringe auf der Ankerstange angeordnet, die über einen Umfang verteilt mehrere schräg abstehende und radial federnde Federzungen aufweisen. Die Zentrierringe werden so auf der Ankerstange angeordnet, dass die Federzungen schräg in Richtung eines hinteren Endes der Ankerstange abstehen. Ein hinterer der beiden Zentrierringe wird so auf der Ankerstange angeordnet, dass er sich beim Einbringen der Ankerstange in das Ankerloch im Ankerloch befindet. Die Federzungen der beiden Zentrierringe stützen sich elastisch radial an einer Lochwand des Ankerlochs ab und zentrieren dadurch die Ankerstange im Ankerloch.

Aufgabe der Erfindung ist, eine Gefahr eines axialen Verschiebens eines Zentrierrings auf einer Ankerstange bei einem Einbringen der Ankerstange in ein Ankerloch zu verringern. Ein solches axiales Verschieben auf der Ankerstange kann dazu führen, dass der Zentrierring nicht in das Ankerloch gelangt, sondern an einer Mündung des Ankerlochs, dem Bohrlochmund, also dem äußeren, zugänglichen und dem Bohrlochgrund gegenüberliegenden Ende der Sacklochbohrung, in die die Ankerstange eingebracht wird, rückgehalten wird.

Diese Aufgabe wird erfindungsgemäß durch die Merkmale des Anspruchs 1 gelöst. Die erfindungsgemäße Befestigungsanordnung ist zu einer Verankerung, das heißt zu einer Befestigung einer Ankerstange in einem Ankerloch in einem Ankergrund mit einer aushärtenden Masse wie beispielsweise einem Mörtel, auch einem Einkomponenten- oder Mehrkomponenten-Kunstharzmörtel vorgesehen. Nach einem Aushärten wird die aushärtende Masse als "ausgehärtete Masse" bezeichnet. Die Ankerstange ist insbesondere eine Gewindestange. Der Ankergrund ist beispielsweise Stein, Fels, Mauerwerk oder Beton, in den das Ankerloch insbesondere gebohrt wird oder ist. Das Ankerloch erstreckt sich von einem Bohrlochmund, also dem von außen zugänglichen hinteren Ende des Ankerlochs, bis zu einem Bohrlochgrund, der das vordere Ende des Ankerlochs bildet, das somit auch als Sackloch bezeichnet werden kann.

An einem vorderen Ende der Ankerstange ist ein Zentrierelement angeordnet, das mindestens ein Anlageelement aufweist, das zu einer Anlage an einer Lochwand des Ankerlochs vorgesehen ist, wenn die Ankerstange mit dem vorderen Ende mit dem Zentrierelement voraus in das Ankerloch eingebracht ist. In einem axialen Abstand vom vorderen Ende ist ein Zentrierring auf der Ankerstange angeordnet, der mit seiner Innenseite umlaufend oder zumindest stellenweise an der Ankerstange anliegt. Wenn die Ankerstange eine Gewindestange ist, liegt der Zentrierring beispielsweise außen an einem Gewinde der Ankerstange an. Der Zentrierring ist oder wird so auf der Ankerstange angeordnet, dass er sich in dem Ankerloch befindet, wenn die Ankerstange in das Ankerloch eingebracht ist, vorzugsweise mit einem Abstand vom Bohrlochmund, der insbesondere mindestens 10 % des Durchmessers des Ankerlochs beträgt, so dass eine flächige Anlage des Zentrierrings an der Wand des Ankerlochs gewährleistet ist.

Der Zentrierring definiert einen gedachten, zu der Ankerstange konzentrischen Umzylinder. Entsprechend einem Umkreis in der ebenen Geometrie ist der Umzylinder ein gedachter, zu der Ankerstange konzentrischer Zylinder, den der Zentrierring an mindestens einer und vorzugsweise an mehreren Stellen, die gleichmäßig oder ungleichmäßig über einen Umfang verteilt sind, berührt, aber nirgends radial nach außen durchdringt. Das heißt, der Zentrierring befindet sich vollständig innerhalb des Umzylinders. Die Stellen, an denen der Zentrierring den Umzylinder berührt, können sich in einer gemeinsamen Radialebene befinden oder in axialer Richtung zueinander versetzt sein. Der Zentrierring kann den Umzylinder auch umlaufend mit oder ohne Unterbrechungen berühren. Ein Durchmesser des Umzylinders ist größer als ein Durchmesser der Ankerstange und im Falle einer Gewindestange als Ankerstange größer als ein Außendurchmesser des Gewindes der Ankerstange beziehungsweise Gewindestange. Der gedachte Umzylinder umschließt die Ankerstange also mit einem umlaufenden Ringspalt, der bei einer zylindrischen Ankerstange an jeder Umfangsstelle gleich breit ist.

Das mindestens eine Anlageelement des Zentrierelements oder zumindest ein Teil des mindestens einen Anlageelements befindet sich in unverformtem Zustand des Zentrierelements einschließlich des mindestens einen Anlageelements außerhalb des Umzylinders des Zentrierrings. Das mindestens eine Anlageelement des Zentrierelements ist - vorzugsweise elastisch, eventuell aber auch plastisch - in radialer Richtung zur Ankerstange so weit beweglich, dass es sich innerhalb des Umzylinders des Zentrierrings befindet. Bei einem Einbringen der Ankerstange in das Ankerloch, dessen Durchmesser so groß wie der Durchmesser des Umkreises des Zentrierrings oder auch größer ist, dessen Radius jedoch kleiner als ein radialer Abstand eines radial am weitesten radial von der Ankerstange entfernten Teils des mindestens einen Anlageelements von einer Längsachse der Ankerstange ist, beaufschlagt eine Lochwand des Ankerlochs das mindestens eine Anlageelement des Zentrierelements, das am vorderen Ende auf der Ankerstange angeordnet ist, das mindestens eine Anlageelement radial nach innen in Richtung der Ankerstange derart, dass das Anlageelement innen an der Lochwand des Ankerlochs anliegt.

Zur Verankerung in dem Ankerloch wird die Ankerstange mit dem Zentrierelement an ihrem vorderen Ende und dem Zentrierring in dem axialen Abstand von dem vorderen Ende mit dem vorderen Ende voraus so tief in das Ankerloch eingebracht, dass sich der Zentrierring in dem Ankerloch befindet, vorzugsweise mit einem Abstand vom Bohrlochmund, der insbesondere mindestens 10 % des Durchmessers des Ankerlochs beträgt. Das Ankerloch weist einen Durchmesser auf, der mindestens so groß wie der Umkreis des Zentrierrings und vorzugsweise etwas größer ist. Dadurch ist eine Reibung zwischen der Lochwand des Ankerlochs und dem Zentrierring sehr niedrig und der Zentrierring bewegt sich nicht axial auf der Ankerstange, sondern gelangt auf der Ankerstange in das Ankerloch. Ein Radius des Ankerlochs ist höchstens so groß und vorzugsweise kleiner als ein radialer Abstand des radial am weitesten von der Längsachse der Ankerstange entfernten Teils des mindestens einen Anlageelements des Zentrierelements. Dadurch liegt das mindestens eine Anlageelement ohne oder vorzugsweise mit einer radialen Vorspannung innen an der Lochwand des Ankerlochs an und richtet das vordere Ende der Ankerstange im Ankerloch aus.

Vorzugsweise ist das Zentrierelement so gestaltet, dass es einen die Ankerstange im Ankerloch umschließenden Ringspalt sicherstellt, um sicherzustellen, dass eine aushärtende Masse, mit der die Ankerstange im Ankerloch verankert wird, die Ankerstange im Ankerloch vollständig umschließt, und zwar insbesondere über die gesamte Länge der Ankerstange im Ankerloch. Vorzugsweise ist das Zentrierelement so gestaltet, dass es die Ankerstange im Ankerloch zentriert, was bei einer zylindrischen Ankerstange einen Ringspalt mit konstanter Breite über den Umfang bedeutet.

Vorzugsweise weist das Zentrierelement mindestens drei radial bewegliche Anlageelemente auf, die in unverformtem Zustand den Umzylinder des Zentrierrings durchdringen und radial nach außen über den Umzylinder überstehen. Die Lochwand des Ankerlochs beaufschlagt die mindestens drei Anlageelemente radial nach innen in Richtung der Ankerstange, wodurch die Anlageelemente innen an der Lochwand des Ankerlochs anliegen und das vordere Ende der Ankerstange im Ankerloch zentrieren. In Umfangsrichtung sind die Anlageelemente des Zentrierelement vorzugsweise um weniger als 180° zueinander versetzt derart, dass sich mindestens ein Anlageelement außerhalb eines gedachten, zur Ankerstange koaxialen Halbkreises befindet, in dem sich mindestens zwei andere Anlageelemente befinden. Möglich ist beispielsweise auch eine Ausführung des Zentrierelements mit zwei radial beweglichen Anlageelementen, die vorzugsweise gegenüber am Zentrierelement angeordnet sind und die das vordere Ende der Ankerstange im Ankerloch zentrieren.

Der Durchmesser des Ankerlochs, in das die Ankerstange mit dem Zentrierelement an ihrem vorderen Ende und mit dem in axialem Abstand vom vorderen Ende auf ihr anliegend angeordneten Zentrierring eingebracht wird, ist vorzugsweise größer als der Durchmesser des Umzylinders des Zentrierrings, damit eine Reibung zwischen der Lochwand und dem Zentrierring beim Einbringen der Ankerstange in das Ankerloch niedrig ist und sich der Zentrierring nicht axial auf der Ankerstange verschiebt. Ein Radius des Ankerlochs ist vorzugsweise kleiner oder jedenfalls nicht größer als der radiale Abstand des radial am weitesten von der Längsachse der Ankerstange entfernten Teils des oder der Anlageelemente des Zentrierelements. Dadurch hält das mindestens eine Anlageelement das vordere Ende der Ankerstange in einem Abstand von der Lochwand des Ankerlochs und vorzugsweise zentrieren mehrere Anlageelemente das vordere Ende der Ankerstange im Ankerloch.

Eine Ausgestaltung der Erfindung sieht eine Verankerung der Ankerstange mit einer aushärtenden beziehungsweise ausgehärteten Masse wie beispielsweise einem Kunstharzmörtel in dem Ankerloch vor. Die aushärtenden Masse wird in fließfähigem Zustand in das Ankerloch eingebracht und in dem die Ankerstange im Ankerloch umgebenden Ringspalt verteilt derart, dass die aushärtende beziehungsweise die nach dem Aushärten ausgehärtete Maß die Ankerstange im Ankerloch beziehungsweise im Ankergrund verankert. Die aushärtenden Masse kann vor oder nach der Ankerstange in das Ankerloch eingebracht werden, vorzugsweise wird sich jedoch vorher eingebracht.

Das mindestens eine Anlageelement des Zentrierelements federt vorzugsweise radial zu einem Umzylinder des Zentrierelements um eine Tangentialachse des Umzylinders und zu einer zu dem Umzylinder parallelen Achse, die hier als "Parallelachse" bezeichnet wird.

Dabei ist die Tangentialachse des mindestens einen Anlageelements vorzugsweise außerhalb einer Umfangsmitte des mindestens einen Anlageelements und vorzugsweise an einem Längsrand des mindestens einen Anlageelements angeordnet. Dadurch federt schwenkend mehr als eine Hälfte und vorzugsweise das ganze Anlageelement um die Tangentialachse radial nach innen, was bei einem gegebenen Schwenkwinkel einen großen radialen Weg des Anlageelements ergibt.

Eine Abwicklung des Anlageelements in eine Ebene ist L-förmig. "Abwicklung" bedeutet eine Ausbreitung des Anlageelements in eine Ebene, das heißt eine Krümmung des Anlageelements in der Umfangsrichtung wird auf "null" verkleinert. Insbesondere ist das Anlageelement radial zum Zentrierelement gesehen L-förmig.

Eine Weiterbildung der Erfindung sieht vor, dass das mindestens eine Anlageelement eine radial nach innen stehende Anbindung aufweist, in die es mit einer tangentialen Abwinklung übergeht, die insbesondere zugleich auch die Tangentialachse definiert, um die das Anlageelement radial nach innen schwenkbar ist.

Bei Ausführungen des Zentrierelements mit mehr als einem Anlageelement sieht eine Ausgestaltung der Erfindung Axialdurchlässe für die aushärtenden Masse in fließfähigem Zustand zwischen den Anbindungen zweier in Umfangsrichtung benachbarter Anlageelemente vor.

In einer Richtung von dem vorderen Ende der Ankerstange nach hinten in Richtung eines dem vorderen Ende fernen hinteren Ende der Ankerstange verläuft eine der Ankerstange abgewandte Außenfläche des mindestens einen Anlageelements des Zentrierelement schräg nach außen.

In bevorzugter Ausgestaltung weist das Zentrierelement ein axiales Widerlager auf, das ein vorderes Stirnende der Ankerstange übergreift, wenn das Zentrierelement am vorderen Ende auf der Ankerstange angeordnet ist. Das Widerlager stellt einen axialen Halt des Zentrierelements am vorderen Ende der Ankerstange sicher. Beim Einbringen der Ankerstange in das Ankerloch bewegt sich das Zentrierelement mit der Ankerstange mit in das Ankerloch hinein und wird nicht durch Reibung mit der Lochwand des Ankerlochs rückgehalten und auf der Ankerstange vom vorderen Ende weg nach hinten verschoben.

Eine Ausgestaltung der Erfindung sieht vor, dass der Zentrierring ein oder vorzugsweise mehrere, nach innen stehende Gewindeeingriffelemente aufweist, die bei Verwendung einer Gewindestange als Ankerstange zwischen Gewindegänge eines Gewindes der Ankerstange beziehungsweise Gewindestange greifen und einen axialen Halt des Zentrierrings auf der Ankerstange verbessern. Die Gewindeeingriffelemente können beispielsweise als in einer Umfangsrichtung verlaufende Rippen, Zähne oder dergleichen ausgeführt sein, die von einer der Ankerstange zugewandten Innenseite des Zentrierrings radial nach innen abstehen.

Damit die aushärtende Masse, solange sie fließfähig ist, im Ankerloch in axialer Richtung an dem Zentrierring vorbei beziehungsweise durch den Zentrierring hindurchfließen kann, sieht eine Ausgestaltung der Erfindung Aussparungen in beiden Stirnrändern des Zentrierrings als Längsdurchlässe für die fließfähige Masse vor. In der Umfangsrichtung des Zentrierrings sind die Aussparungen vorzugsweise zueinander versetzt, in einer Längsrichtung können sie einander überschneiden derart, dass die fließfähige Masse an einem Stirnrand in die Aussparungen fließen, dann in Umfangsrichtung zu einer anderen Aussparung fließen und durch diese Aussparungen an einem anderen Stirnrand des Zentrierrings herausfließen kann. Es sind Ausführungen der Erfindung möglich, die nicht alle Merkmale eines abhängigen Anspruchs aufweisen. Ausführungen der Erfindung, die nicht alle Merkmale des Ausführungsbeispiels aufweisen, sind möglich. Die Erfindung wird nachfolgend anhand eines in der Zeichnung dargestellten Ausführungsbeispiels näher erläutert.

Es zeigen:
- Figur 1: eine perspektivische Explosionsdarstellung einer erfindungsgemäßen Befestigungsanordnung;
- Figur 2: eine Seitenansicht der Befestigungsanordnung aus Figur 1;
- Figur 3: ein Zentrierelement der Befestigungsanordnung aus Figur 1 in einer perspektivischen Darstellung;
- Figur 4: das Zentrierelement aus Figur 3 in einer Stirnansicht;
- Figur 5: einen Zentrierring der Befestigungsanordnung aus Figur 1 in einer perspektivischen Darstellung; und
- Figur 6: einen Achsschnitt der in einem Ankerloch verankerten Befestigungsanordnung aus Figur 1 gemäß der Erfindung.

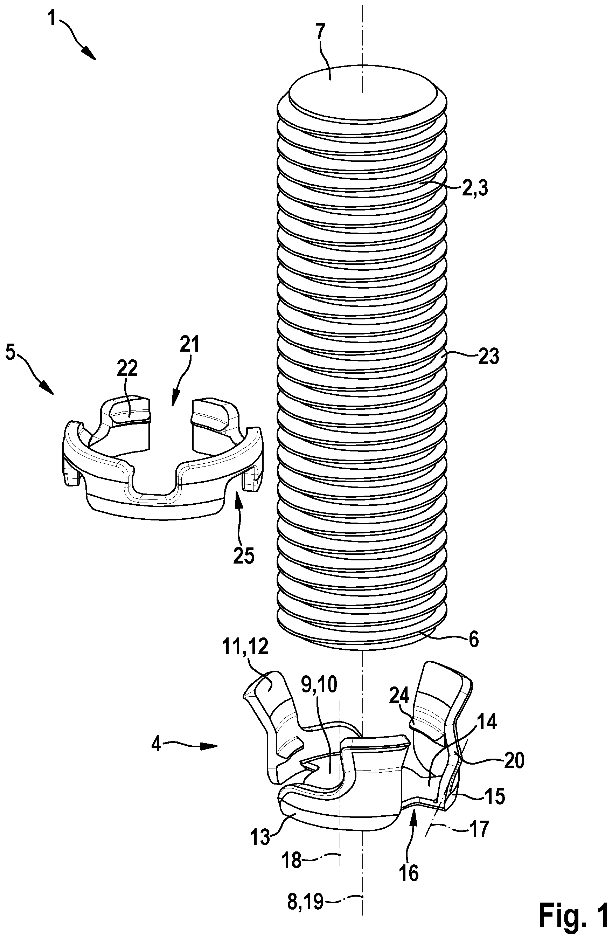

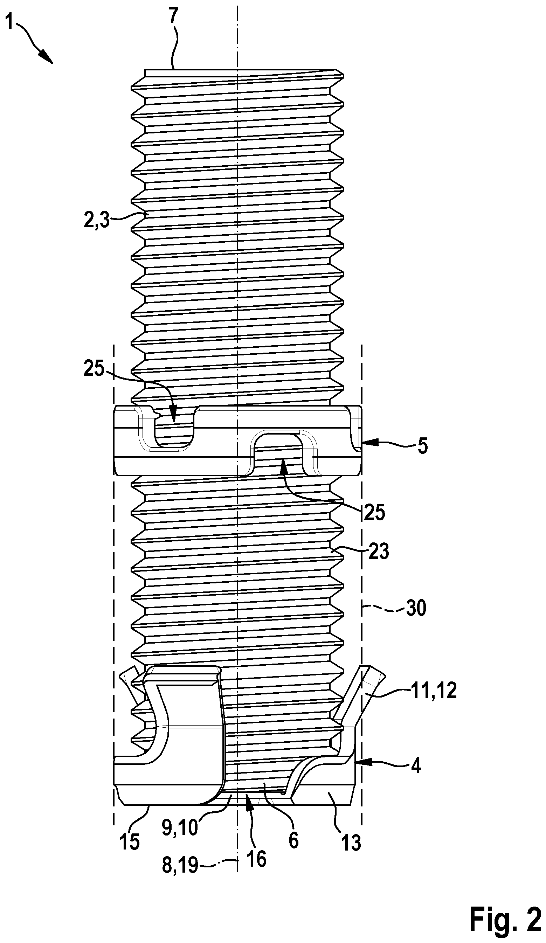

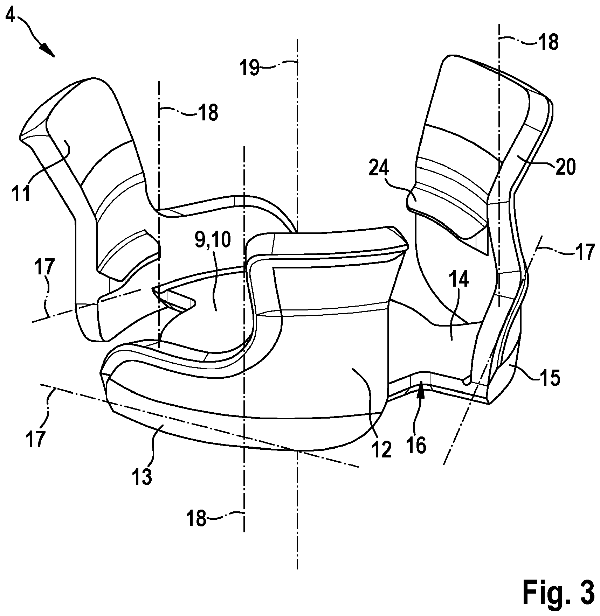

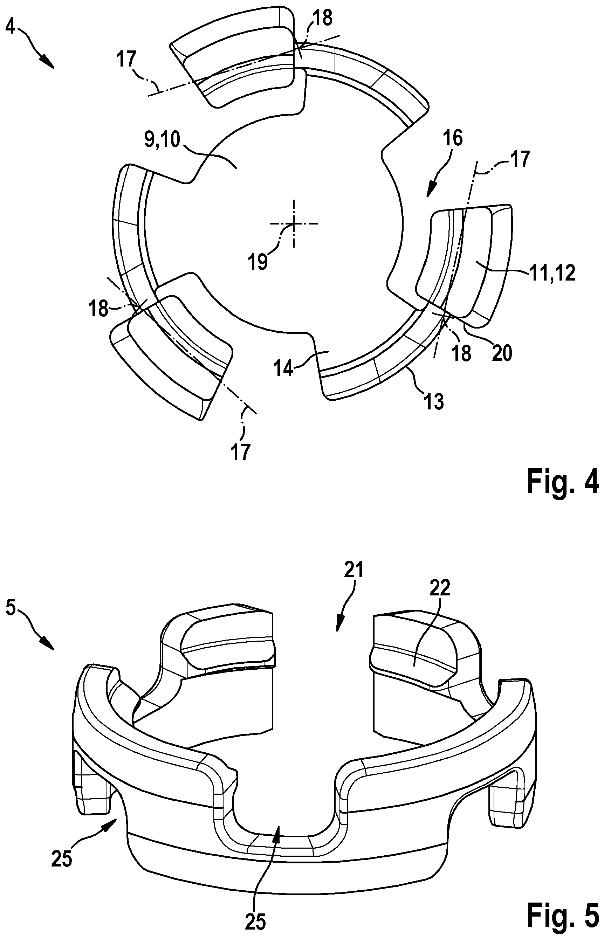

Die in Figuren 1 und 2 dargestellte, erfindungsgemäße Befestigungsanordnung 1 weist eine Gewindestange 2 aus Stahl als Ankerstange 3 sowie ein Zentrierelement 4, das in Figuren 3 und 4 als Einzelteil dargestellt ist, und einen Zentrierring 5, der in Figur 5 als Einzelteil dargestellt ist, auf. Enden der Ankerstange 3 werden hier als vorderes Ende 6 und als hinteres Ende 7 bezeichnet, entsprechend der planmäßigen Einbringrichtung für die Ankerstange 3 in ein Ankerloch, wobei das Zentrierelement 4 auf das vordere Ende 6 der Ankerstange 3 aufgesetzt ist. Des Weiteren weist die Ankerstange 3 eine Längsachse 8 auf.

Das Zentrierelement 4 weist eine kreisförmige Stirnscheibe 9 auf, die an einer Stirnfläche an dem vorderen Ende 6 der Ankerstange 3 anliegt, wenn das Zentrierelement 4 wie vorgesehen auf dem vorderen Ende 6 der Ankerstange 3 angeordnet ist. Die Stirnscheibe 9 bildet ein axiales Widerlager 10, das das vordere Ende 6 der Ankerstange 3 übergreift und das Zentrierelement 4 axial in einer Richtung auf der Ankerstange 3 hält derart, dass das Zentrierelement 4 nicht nach hinten in Richtung des hinteren Endes 7 auf der Ankerstange 3 verschiebbar ist.

Das Zentrierelement 4 weist an seinem Umfang drei Anlageelemente 11 auf, die radial zum Zentrierelement 4 gesehen L-förmig sind. Anders ausgedrückt weisen Abwicklungen der Anlageelemente 11 in eine Ebene eine L-Form auf. Die Abwicklung ist eine gedachte Biegung der in einer Umfangsrichtung des Zentrierelements 4 gewölbten Anlageelemente 11 in eine Ebene. Ein achsparalleler Schenkel 12 der Anlageelemente 11 und damit auch eine Außenfläche der Anlageelemente 11 verläuft über etwa eine Hälfte einer Länge der achsparallelen Schenkel 12 schräg in einem spitzen Winkel zu einer Mittelachse 19 des Zentrierelements 4 und schräg von der Stirnscheibe 9 weg radial nach außen. Die Mittelachse 19 geht senkrecht durch eine Mitte der Stirnscheibe 9 hindurch und fällt mit der Längsachse 8 der Ankerstange 3 zusammen, wenn das Zentrierelement 4 wie vorgesehen mit seiner Stirnscheibe 9 am vorderen Ende 6 anliegend auf dem vorderen Ende 6 der Ankerstange 3 angeordnet ist.

Ein in der Umfangsrichtung verlaufender Umfangsschenkel 13 der L-förmigen Anlageelemente 11 schließt sich auf der Seite an den achsparallelen Schenkel 12 an. Dabei bezieht sich die Bezeichnung "auf der Seite" auf die Umfangsrichtung des Zentrierelements 4. Der Umfangsschenkel 13 ist durch eine radial nach innen stehende Anbindung 14, in die der Umfangsschenkel 13 über eine tangentiale Abwinklung 15 übergeht, mit der Stirnscheibe 9 des Zentrierelements 4 verbunden. Von der Stirnscheibe 9 aus gesehen stehen die Anbindungen 14, die die Stirnscheibe 9 des Zentrierelements 4 mit den Anlageelementen 11 verbinden, an drei Umfangsstellen radial nach außen von der Stirnscheibe 9 ab.

Im Ausführungsbeispiel ist das Zentrierelement 4 einschließlich der Anbindungen 14 und der Anlageelemente 11 einstückig aus Kunststoff gespritzt. Die Anlageelemente 11 sind gleichmäßig über den Umfang der Stirnscheibe 9 beziehungsweise des Zentrierelements 4 verteilt angeordnet, es ist allerdings auch eine ungleichmäßig über den Umfang verteilte Anordnung der Anlageelemente 11 oder eine andere Anzahl als drei Anlageelemente 11 möglich (nicht dargestellt). Beispielsweise kann das Zentrierelement 4 mehr als drei oder auch nur zwei Anlageelemente 11, die dann vorzugsweise einander gegenüber angeordnet sind, aufweisen. Denkbar ist auch eine Ausführung des Zentrierelements 4 mit nur einem Anlageelement 11 (nicht dargestellt). Die Erfindung schließt eine andere Herstellung des Zentrierelements 4 mit den Anlageelementen 11 als aus Kunststoff oder als einstückig nicht aus.

Ein sich in der Umfangsrichtung um die Stirnscheibe 9 erstreckender Freiraum zwischen Anbindungen 14 benachbarter Anlageelemente 11 bildet einen Axialdurchlass 16 für einen Durchtritt einer fließfähigen Masse.

Durch elastisches Biegen der Anbindungen 14, der tangentialen Abwinklungen 15 und durch elastische Torsion der Umfangsschenkel 13 federn die Anlageelemente 11 des Zentrierelements 4 um gedachte Tangentialachsen 17 und durch elastisches Biegen der Umfangsschenkel 13 federn die Anlageelemente 11 um gedachte Parallelachsen 18 derart, dass die Anlageelemente 11 radial beweglich sind. Die Richtungen "tangential", "parallel" und "radial" beziehen sich auf die Mittelachse 19 des Zentrierelements 4.

Die Parallelachsen 18 verlaufen entlang von Längsrändern 20 der achsparallelen Schenkel 12 der L-förmigen Anlageelemente 11 auf der Seite, an denen die achsparallelen Schenkel 12 in die Umfangsschenkel 3 übergehen. In der Umfangsrichtung gesehen befinden sich die Parallelachsen 18 also außerhalb von Umfangsmitten der achsparallelen Schenkel 12 der Anlageelemente 11 an den Längsrändern 20 der achsparallelen Schenkel 12. Durch das elastische Schwenken um die Tangentialachsen 17 und um die Parallelachsen 18 federn die Anlageelemente 11 in radialer Richtung zur Ankerstange 3, wenn das Zentrierelement 4 auf dem vorderen Ende 6 der Ankerstange 3 angeordnet ist.

Der Zentrierring 5 weist eine axial durchgehende Öffnung 21 an einer Umfangsstelle auf derart, dass er nicht nur axial, sondern auch radial auf die Ankerstange 3 aufgesetzt werden kann. Möglich ist auch ein Zentrierring, der in der Umfangsrichtung geschlossen ist und der nur axial auf die Ankerstange 3 aufgesetzt werden kann (nicht dargestellt). Um einen axialen Halt des Zentrierrings 5 auf der Ankerstange 3 zu verbessern, weist der Zentrierring 5 erste Gewindeeingriffelemente 22 auf, die in ein Gewinde 23 der die Ankerstange 3 bildende Gewindestange 2 greifen, wenn der Zentrierring 5 auf die Ankerstange 3 aufgesetzt ist. Im Ausführungsbeispiel sind die ersten Gewindeeingriffelemente 22 als in der Umfangsrichtung verlaufende Rippen mit dreiecksförmigem Querschnitt ausgeführt, die von einer der Ankerstange 3 zugewandten Innenseite des Zentrierring 5 radial nach innen abstehen. Ähnlich den ersten Gewindeeingriffelementen 22 weist das Zentrierelement 4 zweite Gewindeeingriffelemente 24 an der Ankerstange 3 zugewandten Innenseiten der Anlageelemente 11 auf, durch die das Zentrierelement 4 auf die Ankerstange 3 aufgeschraubt oder aufgeklipst werden kann, so das es vor allem vor dem Einbringen in ein Ankerloch gehalten wird.

In beiden Stirnrändern weist der Zentrierring 5 Aussparungen als Längsdurchlässe 25 für die fließfähige Masse auf, die in der Umfangsrichtung versetzt zueinander sind und in axialer Richtung mehr als halb so lang wie der Zentrierring 5 in axialer Richtung hoch ist derart, dass sich die in der Umfangsrichtung zueinander versetzten Längsdurchlässe 25 in der axialen Richtung überschneiden. Dadurch kann die fließfähige Masse von einer Seite in die Längsdurchlässe 25 des Zentrierrings 5 fließen und fließt dann zwischen Gewindegängen des Gewindes 23 der die Ankerstange 3 bildenden Gewindestange 2 in Umfangsrichtung zu einem nächsten Längsdurchlass 25, wo die fließfähige Masse auf einer anderen Seite des Zentrierring 5 austritt.

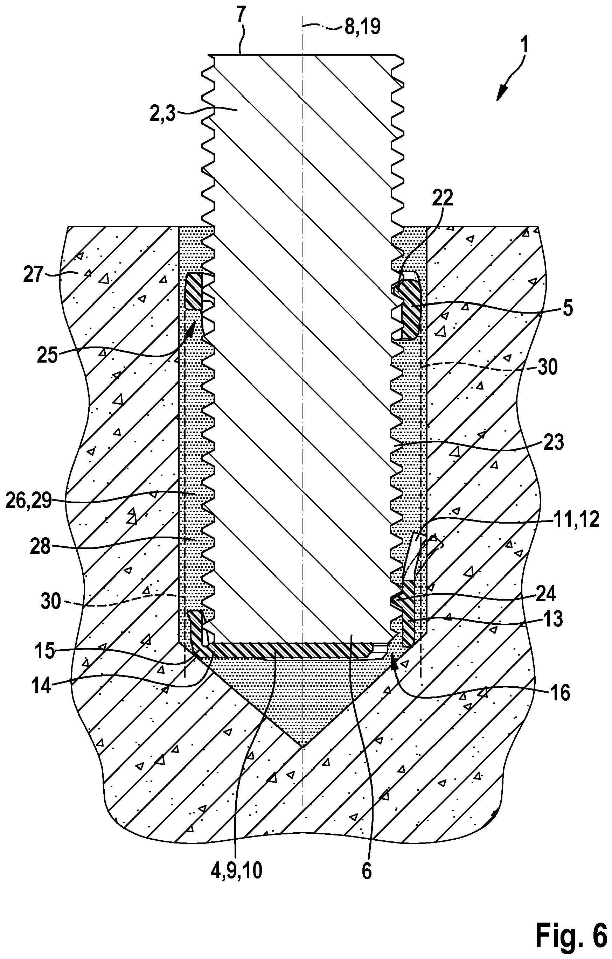

Zu einer Verankerung in einem beispielsweise gebohrten, zylindrischen Ankerloch 26 in einem Ankergrund 27 aus beispielsweise Beton, Mauerwerk, Stein oder Fels (Figur 6) wird das Zentrierelement 4 auf das vordere Ende 6 der Ankerstange 3 aufgesetzt. Der Zentrierring 5 wird in einem axialen Abstand vom vorderen Ende 6 auf die Ankerstange 3 aufgesetzt, der so bemessen ist, dass sich der Zentrierring 5 im Ankerloch 26, vorzugsweise an oder nahe an einer Mündung des Ankerlochs 26, also dem Bohrlochmund, befindet, wenn die Ankerstange 3 in das Ankerloch 26 eingebracht ist, im Ausführungsbeispiel mit einem Abstand vom Bohrlochmund, der etwas mehr als 10 % des Durchmessers des Ankerlochs beträgt (Figur 6). Die Innenseite des Zentrierrings 5 liegt an der Ankerstange 3, im Ausführungsbeispiel außen am Gewinde 23 der Ankerstange 3 an.

In das Ankerloch 26 wird beispielsweise ein Kunstharzmörtel oder eine andere aushärtende Masse 28 in fließfähigem Zustand und vorzugsweise danach die Ankerstange 3 mit ihrem vorderen Ende 6, auf dem das Zentrierelement 4 angeordnet ist, voraus in das Ankerloch 26 eingebracht, bis sich auch der Zentrierring 5 in dem Ankerloch 26 befindet. Beim Einbringen in das Ankerloch 26 beaufschlagt die Ankerstange 3 die aushärtende Masse 28, ähnliche einem Kolben, in Richtung eines Grundes des Ankerlochs 26 und verdrängt sie gleichzeitig und/oder anschließend in einem die Ankerstange 3 im Ankerloch 26 umschließenden Ringspalt 29 axial in Richtung der Mündung des Ankerlochs 26. Dabei fließt die aushärtende Masse durch die Axialdurchlässe 16 zwischen den Anbindungen 14 der Anlageelemente 11 des Zentrierelements 4 hindurch und wird dabei ähnlich wie in einem Statikmischer durchmischt.

Am Zentrierring 5 fließt die aushärtende Masse 28 in die Längsdurchlässe 25 in dem dem Zentrierelement 4 zugewandten Stirnrand des Zentrierrings 5, von dort weiter zwischen den Gewindegängen des Gewindes 23 der Ankerstange 3 in der Umfangsrichtung zu den Längsdurchlässen 25 in dem dem Zentrierelement 4 abgewandten Stirnrand des Zentrierrings 5 und von dort weiter bis zur Mündung des Ankerlochs 26 derart, dass der die Ankerstange 3 im Ankerloch 26 umschließenden Ringspalt 29 im Wesentlichen vollständig mit der aushärtenden Masse 28 ausgefüllt ist.

Ein Außendurchmesser des Zentrierrings 5 ist nicht größer und vorzugsweise etwas kleiner als ein Lochdurchmesser des Ankerlochs 26, so dass eine Reibung zwischen dem Zentrierring 5 und einer Lochwand des Ankerlochs 26 gering ist und sich der Zentrierring 5 beim Einbringen der Ankerstange 3 in das Ankerloch 26 nicht axial auf der Ankerstange 3 verschiebt. Die in das Gewinde 23 der Ankerstange 3 greifenden ersten Gewindeeingriffelemente 22 verbessern den axialen Halt des Zentrierrings 5 auf der Ankerstange 3 derart, dass sich der Zentrierring 5 beim Einbringen der Ankerstange 3 in das Ankerloch 26 weder durch Reibung mit der Lochwand des Ankerlochs 26 noch durch die aushärtenden Masse, die den Zentrierring 5 durch die Längsdurchlässe 25 und zwischen den Gewindegängen durchströmt, axial auf der Ankerstange 3 verschiebt.

In unverformtem, also nicht radial nach innen gefedertem Zustand durchdringen die Anlageelemente 11 des Zentrierelements 4 einen gedachten Umzylinder 30 des Zentrierrings 5, der den gleichen Durchmesser wie der Außendurchmesser des Zentrierrings 5 aufweist und der die Ankerstange 3 koaxial umschließt. Im unverformten Zustand befinden sich also Teile der schräg in einem spitzen Winkel zur Längsachse 7 verlaufenden Anlageelemente 11 radial außerhalb des Umzylinders 30. Die Anlageelemente 11 stehen im unverformten Zustand so weit radial nach außen von der Ankerstange 3 ab, dass sie beim Einbringen in das Ankerloch 26 vom Ankerloch 26 elastisch radial nach innen gebogen werden derart, dass die Anlageelemente 11 mit einer radialen Vorspannung an der Lochwand des Ankerlochs 26 anliegen und das vordere Ende 6 der Ankerstange 3 im Ankerloch 26 zentrieren. Der unverformte Zustand eines der Anlageelemente 11 ist in Figur 6 auf der rechten Seite des Zentrierrings 5 mit Strichlinien gezeichnet. Bei dem elastischen, radialen Nachinnendrücken schwenken die Anlageelemente 11 um die Tangentialachsen 17 und um die Parallelachsen 18.

Nach ihrem Aushärten hält, das heißt verankert, die dann als ausgehärtete Masse 28 zu bezeichnende aushärtende Masse 28 die Ankerstange 3 im Ankerloch 26.

### Bezugszeichenliste

### Befestigungsanordnung zur Verankerung in einem Ankerloch

- 1: Befestigungsanordnung
- 2: Gewindestange
- 3: Ankerstange
- 4.: Zentrierelement
- 5: Zentrierring
- 6: vorderes Ende
- 7: hinteres Ende
- 8: Längsachse
- 9: Stirnscheibe
- 10: axiales Widerlager
- 11: Anlageelement
- 12: achsparalleler Schenkel
- 13: Umfangsschenkel
- 14: Anbindung
- 15: tangentiale Abwinklung
- 16: Axialdurchlass
- 17: Tangentialachse
- 18: Parallelachse
- 19: Mittelachse
- 20: Längsrand
- 21: Öffnung
- 22: erstes Gewindeeingriffelement
- 23: Gewinde
- 24: zweites Gewindeeingriffelement
- 25: Längsdurchlass
- 26: Ankerloch
- 27: Ankergrund
- 28: aushärtende Masse
- 29: Ringspalt
- 30: Umzylinder

## Patentansprüche

1. Befestigungsanordnung zur Verankerung einer Ankerstange (3) in einem Ankerloch (26) mit einer aushärtenden Masse (28), mit der Ankerstange (3), mit einem Zentrierelement (4), das an einem vorderen Ende (6) auf der Ankerstange (3) angeordnet ist und das mindestens ein Anlageelement (11) aufweist, und mit einem Zentrierring (5), der mit axialem Abstand vom vorderen Ende (6) auf der Ankerstange (3) anliegend angeordnet ist und der einen gedachten, zur Ankerstange (3) konzentrischen Umzylinder (30) definiert, wobei in einem unverformten Zustand sich zumindest ein Teil des mindestens einen Anlageelements (11) des Zentrierelements (4) außerhalb des Umzylinders (30) des Zentrierrings (5) befindet und wobei das mindestens eine Anlageelement (11) in radialer Richtung zur Ankerstange (3) derart bewegbar ist, dass es sich vollständig innerhalb des Umzylinders (30) befindet.

2. Befestigungsanordnung nach Anspruch 1, **dadurch gekennzeichnet, dass** die Ankerstange (3) in einem Ankerloch (26) angeordnet ist derart, dass sich das Zentrierelement (4) und der Zentrierring (5) mit Abstand vom Bohrlochmund in dem Ankerloch (26) befinden.

3. Befestigungsanordnung nach Anspruch 2, **dadurch gekennzeichnet, dass** der Umzylinder (30) des Zentrierrings (5) einen kleineren Durchmesser aufweist als das Ankerloch (26) und dass das mindestens eine Anlageelement (11) des Zentrierelements (4) an einer Lochwand des Ankerlochs (26) anliegt.

4. Befestigungsanordnung nach Anspruch 2 oder 3, **dadurch gekennzeichnet, dass** die Ankerstange (3) mit einer ausgehärteten Masse (28), die vor dem Aushärten in fließfähigem Zustand in das Ankerloch (26) eingebracht und in einem die Ankerstange (3) in dem Ankerloch (26) umgebenden Ringspalt (29) verteilt worden ist, im Ankerloch (26) befestigt ist.

5. Befestigungsanordnung nach einem oder mehreren der vorhergehenden Ansprüche, **dadurch gekennzeichnet, dass** das mindestens eine Anlageelement (11) des Zentrierelements (4) um eine zu einer Mittelachse (19) des Zentrierelements (4) tangentiale Tangentialachse (17) und um eine zu der Mittelachse (19) parallele Parallelachse (18) radial federt.

6. Befestigungsanordnung nach Anspruch 5, **dadurch gekennzeichnet, dass** die Tangentialachse (17) des mindestens einen Anlageelements (11) des Zentrierelements (4) außerhalb von einer Umfangsmitte des mindestens einen Anlageelements (11) und vorzugsweise an einem Längsrand (20) des mindestens einen Anlageelements (11) angeordnet ist.

7. Befestigungsanordnung nach Anspruch 5 oder 6, **dadurch gekennzeichnet, dass** eine ebene Abwicklung des Anlageelements (11) L-förmig ist.

8. Befestigungsanordnung nach Anspruch 7, **dadurch gekennzeichnet, dass** das mindestens eine Anlageelement (11) eine radial nach innen stehende Anbindung (14) aufweist, in die es mit einer tangentialen Abwinklung (15) übergeht.

9. Befestigungsanordnung nach Anspruch 8, **dadurch gekennzeichnet, dass** das Zentrierelement (4) Axialdurchlässe (16) zwischen den Anbindungen (14) von zwei Anlageelementen (11) aufweist.

10. Befestigungsanordnung nach einem oder mehreren der Ansprüche 5 bis 9, **dadurch gekennzeichnet, dass** der Ankerstange (3) abgewandte Außenflächen des mindestens einen radial federnden Anlageelements (11) des Zentrierelements (4) aus Richtung des vorderen Endes (6) der Ankerstange (3) in Richtung des hinteren Endes (7) der Ankerstange (3) schräg zur Ankerstange (3) nach außen verlaufen.

11. Befestigungsanordnung nach einem oder mehreren der Ansprüche 5 bis 10, **dadurch gekennzeichnet, dass** das Zentrierelement (4) ein axiales Widerlager (10) aufweist, das, wenn das Zentrierelement (4) auf dem vorderen Ende (6) der Ankerstange (3) angeordnet ist, das vordere Ende (6) der Ankerstange (3) übergreift derart, dass das Zentrierelement (4) nicht vom vorderen Ende (6) auf der Ankerstange (3) nach hinten in Richtung eines dem vorderen Ende (6) fernen hinteren Endes (7) der Ankerstange (3) verschiebbar ist.

12. Befestigungsanordnung nach einem oder mehreren der Ansprüche 5 bis 11, **dadurch gekennzeichnet, dass** das Zentrierelement (4) zwei Anlageelemente (11) oder mindestens drei Anlageelemente (11) aufweist.

13. Befestigungsanordnung nach einem oder mehreren der Ansprüche 1 bis 4, **dadurch gekennzeichnet, dass** der Zentrierring (5) ein radial nach innen stehendes Gewindeeingriffelement (22) für einen Gewindeeingriff in ein Gewinde (23) der Ankerstange (3) aufweist.

14. Befestigungsanordnung nach einem oder mehreren der Ansprüche 1 bis 4, **dadurch gekennzeichnet, dass** der Zentrierring (5) Aussparungen in einem vorderen und einem hinteren Stirnrand als Längsdurchlässe (25) für eine fließfähige Masse aufweist.

15. Befestigungsanordnung nach Anspruch 14, **dadurch gekennzeichnet, dass** die Längsdurchlässe (25) in den beiden Stirnrändern des Zentrierrings (5) in der Umfangsrichtung zueinander versetzt sind und in der Längsrichtung einander überschneiden.

## Claims

1. Fastening arrangement for anchoring an anchor rod (3) in an anchor hole (26) using a hardening mass (28), comprising the anchor rod (3), a centering element (4) which is arranged at a front end (6) on the anchor rod (3) and which has at least one contact element (11), and a centering ring (5) which is arranged in contact with the anchor rod (3) at an axial distance from the front end (6) and which defines an imaginary surrounding cylinder (30) that is concentric with the anchor rod (3), wherein, in an undeformed state, at least part of the at least one contact element (11) of the centering element (4) is located outside the surrounding cylinder (30) of the centering ring (5), and wherein the at least one contact element (11) is movable in a radial direction relative to the anchor rod (3) such that it is located completely inside the surrounding cylinder (30).

2. Fastening arrangement according to claim 1, **characterized in that** the anchor rod (3) is arranged in an anchor hole (26) such that the centering element (4) and the centering ring (5) are located in the anchor hole (26) at a distance from the borehole mouth.

3. Fastening arrangement according to claim 2, **characterized in that** the surrounding cylinder (30) of the centering ring (5) has a smaller diameter than the anchor hole (26) **and in that** the at least one contact element (11) of the centering element (4) is in contact with a hole wall of the anchor hole (26).

4. Fastening arrangement according to either claim 2 or claim 3, **characterized in that** the anchor rod (3) is fastened in the anchor hole (26) using a hardened mass (28) which has been introduced into the anchor hole (26) in a flowable state before hardening and has been distributed in an annular gap (29) that surrounds the anchor rod (3) in the anchor hole (26).

5. Fastening arrangement according to one or more of the preceding claims, **characterized in that** the at least one contact element (11) of the centering element (4) is radially resilient about a tangential axis (17) that is tangential to a central axis (19) of the centering element (4) and about a parallel axis (18) that is parallel to the central axis (19).

6. Fastening arrangement according to claim 5, **characterized in that** the tangential axis (17) of the at least one contact element (11) of the centering element (4) is arranged outside of a circumferential center of the at least one contact element (11) and preferably on a longitudinal edge (20) of the at least one contact element (11).

7. Fastening arrangement according to either claim 5 or claim 6, **characterized in that** a planar development of the contact element (11) is L-shaped.

8. Fastening arrangement according to claim 7, **characterized in that** the at least one contact element (11) has a radially inward connection (14) into which it merges with a tangential bend (15).

9. Fastening arrangement according to claim 8, **characterized in that** the centering element (4) has axial passages (16) between the connections (14) of two contact elements (11).

10. Fastening arrangement according to one or more of claims 5 to 9, **characterized in that** outer surfaces of the at least one radially resilient contact element (11) of the centering element (4) facing away from the anchor rod (3) extend outward from the direction of the front end (6) of the anchor rod (3) in the direction of the rear end (7) of the anchor rod (3) at an angle to the anchor rod (3).

11. Fastening arrangement according to one or more of claims 5 to 10, **characterized in that** the centering element (4) has an axial abutment (10) which, when the centering element (4) is arranged on the front end (6) of the anchor rod (3), overlays the front end (6) of the anchor rod (3) such that the centering element (4) cannot be displaced backward from the front end (6) on the anchor rod (3) in the direction of a rear end (7) of the anchor rod (3) that is remote from the front end (6).

12. Fastening arrangement according to one or more of claims 5 to 11, **characterized in that** the centering element (4) has two contact elements (11) or at least three contact elements (11).

13. Fastening arrangement according to one or more of claims 1 to 4, **characterized in that** the centering ring (5) has a radially inwardly projecting threaded engaging element (22) for threaded engagement in a thread (23) of the anchor rod (3).

14. Fastening arrangement according to one or more of claims 1 to 4, **characterized in that** the centering ring (5) has recesses which serve as longitudinal passages (25) for a flowable mass in a front and a rear end edge.

15. Fastening arrangement according to claim 14, **characterized in that** the longitudinal passages (25) in the two end edges of the centering ring (5) are offset from one another in the circumferential direction and overlap one another in the longitudinal direction.

## Revendications

1. Agencement de fixation pour l'ancrage d'une tige d'ancrage (3) dans un trou d'ancrage (26) avec une matière (28) durcissable, comportant la tige d'ancrage (3), comportant un élément de centrage (4) qui est disposé au niveau d'une extrémité avant (6) sur la tige d'ancrage (3) et qui présente au moins un élément d'appui (11), et comportant une bague de centrage (5) qui est disposée en appui sur la tige d'ancrage (3) à une certaine distance axiale de l'extrémité avant (6) et qui définit un cylindre enveloppant (30) imaginaire, concentrique par rapport à la tige d'ancrage (3), dans lequel au moins une partie de l'au moins un élément d'appui (11) de l'élément de centrage (4) se trouve, dans un état non déformé, à l'extérieur du cylindre enveloppant (30) de la bague de centrage (5) et dans lequel l'au moins un élément d'appui (11) peut être déplacé dans la direction radiale par rapport à la tige d'ancrage (3) de telle sorte qu'il se trouve entièrement à l'intérieur du cylindre enveloppant (30).

2. Agencement de fixation selon la revendication 1, **caractérisé en ce que** la tige d'ancrage (3) est disposée dans un trou d'ancrage (26) de telle sorte que l'élément de centrage (4) et la bague de centrage (5) se trouvent à distance de l'embouchure de trou dans le trou d'ancrage (26).

3. Agencement de fixation selon la revendication 2, **caractérisé en ce que** le cylindre enveloppant (30) de la bague de centrage (5) présente un diamètre inférieur à celui du trou d'ancrage (26) **et en ce que** l'au moins un élément d'appui (11) de l'élément de centrage (4) s'appuie sur une paroi de trou du trou d'ancrage (26).

4. Agencement de fixation selon la revendication 2 ou 3,
**caractérisé en ce que** la tige d'ancrage (3) est fixée dans le trou d'ancrage (26) avec une matière (28) durcie qui a été introduite à l'état fluide dans le trou d'ancrage (26) avant le durcissement et qui a été répartie dans un espace annulaire (29) entourant la tige d'ancrage (3) dans le trou d'ancrage (26).

5. Agencement de fixation selon une ou plusieurs des revendications précédentes, **caractérisé en ce que** l'au moins un élément d'appui (11) de l'élément de centrage (4) est élastique radialement autour d'un axe tangentiel (17) tangentiel par rapport à un axe central (19) de l'élément de centrage (4) et autour d'un axe parallèle (18) parallèle à l'axe central (19).

6. Agencement de fixation selon la revendication 5, **caractérisé en ce que** l'axe tangentiel (17) de l'au moins un élément d'appui (11) de l'élément de centrage (4) est disposé à l'extérieur d'un centre circonférentiel de l'au moins un élément d'appui (11) et de préférence sur un bord longitudinal (20) de l'au moins un élément d'appui (11).

7. Agencement de fixation selon la revendication 5 ou 6,
**caractérisé en ce qu'**un développement plan de l'élément d'appui (11) est en forme de L.

8. Agencement de fixation selon la revendication 7, **caractérisé en ce que** l'au moins un élément d'appui (11) présente un moyen de liaison (14) dirigé radialement vers l'intérieur, avec lequel il se raccorde à un coude tangentiel (15).

9. Agencement de fixation selon la revendication 8, **caractérisé en ce que** l'élément de centrage (4) présente des passages axiaux (16) entre les moyens de liaison (14) de deux éléments d'appui (11).

10. Agencement de fixation selon une ou plusieurs des revendications 5 à 9, **caractérisé en ce que** des surfaces extérieures, opposées à la tige d'ancrage (3), de l'au moins un élément d'appui (11) élastique radialement de l'élément de centrage (4) s'étendent vers l'extérieur en oblique par rapport à la tige d'ancrage (3), à partir de l'extrémité avant (6) de la tige d'ancrage (3) en direction de l'extrémité arrière (7) de la tige d'ancrage (3).

11. Agencement de fixation selon une ou plusieurs des revendications 5 à 10, **caractérisé en ce que** l'élément de centrage (4) présente une butée axiale (10) qui, lorsque l'élément de centrage (4) est disposé sur l'extrémité avant (6) de la tige d'ancrage (3), recouvre l'extrémité avant (6) de la tige d'ancrage (3) de telle sorte que l'élément de centrage (4) ne peut pas être déplacé vers l'arrière depuis l'extrémité avant (6) sur la tige d'ancrage (3) en direction d'une extrémité arrière (7) de la tige d'ancrage (3) éloignée de l'extrémité avant (6).

12. Agencement de fixation selon une ou plusieurs des revendications 5 à 11, **caractérisé en ce que** l'élément de centrage (4) présente deux éléments d'appui (11) ou au moins trois éléments d'appui (11).

13. Agencement de fixation selon une ou plusieurs des revendications 1 à 4, **caractérisé en ce que** la bague de centrage (5) présente un élément de mise en prise par filetage (22) dirigé radialement vers l'intérieur pour une mise en prise par filetage dans un filetage (23) de la tige d'ancrage (3).

14. Agencement de fixation selon une ou plusieurs des revendications 1 à 4, **caractérisé en ce que** la bague de centrage (5) présente des évidements dans un bord d'extrémité avant et un bord d'extrémité arrière en tant que passages longitudinaux (25) pour une matière fluide.

15. Agencement de fixation selon la revendication 14, **caractérisé en ce que** les passages longitudinaux (25) dans les deux bords d'extrémité de la bague de centrage (5) sont décalés l'un par rapport à l'autre dans la direction circonférentielle et se recoupent dans la direction longitudinale.
